# EUROPÄISCHE PATENTSCHRIFT

(11) **EP 0 317 493 B1**
(45) Veröffentlichungstag und Bekanntmachung des Hinweises auf die Patenterteilung: **08.06.1994**
(21) Anmeldenummer: 88730251.1
(22) Anmeldetag: 17.11.1988
(51) Int. Cl.: G02B 5/10, G02B 23/00

(54) **Primärspiegel für ein Spiegelteleskop**
Primary mirror for a mirror telescope
Miroir primaire pour téléscope à miroir

(30) Priorität: 20.11.1987 DE 3739841
(43) Veröffentlichungstag der Anmeldung: 24.05.1989
(73) Patentinhaber: Hügenell, Hermann, D-67245 Lambsheim (DE); Angstenberger, Karl Friedrich, Dipl.-Ing., D-67227 Frankenthal (DE)
(72) Erfinder: Hügenell, Hermann, D-6715 Lambsheim (DE)
(74) Vertreter: Bosshard, Ernst

(56) Entgegenhaltungen:
- EP-A- 0 222 689
- DE-A- 3 018 785
- GB-A- 2 163 076
- US-A- 3 514 275
- US-A- 3 972 598
- SOLAR ENERGY MATERIALS, Band 16, Nr. 5, November 1987, Seiten 423-433, Elsevier Science Publishers B.V., Amsterdam, NL; F.L. BOUQUET et al.: "Recent advances in long-lived mirrors for terrestrial and space applications"
- OPTICAL ENGINEERING, Band 14, Nr. 2, März-April 1975, Seiten 112-115, Soc. of Photo-Optical Instr. Engineers, California, US; R.M. SCOTT: "New technique for controlling optical mirror shapes"
- APPLIED OPTICS, Band 21, Nr. 14, 15. Juli 1982, Seiten 2631-2641; J.S. MAST et al.: "Figure control for a fully segmented telescope mirror"

## Beschreibung

Die Erfindung bezieht sich auf einen Primärspiegel für ein Spiegelteleskop, der aus einer Vielzahl von einzelnen, vieleckigen Spiegelkörpern zusammengesetzt ist und eine asphärisch gekrümmte Spiegelfläche aufweist, wobei den einzelnen Spiegelkörpern Lagerungs- und Justierelemente zugeordnet sind, die unterhalb der Spiegelkörper angeordnet sind, und wobei die einzelnen Spiegelkörper nahezu lückenlos zusammengesetzt sind. Weiterhin betrifft die vorliegende Erfindung ein Verfahren zur Herstellung eines derartigen Primärspiegels.

Ein Primärspiegel der eingangs genannten Art ist aus "Applied Optics" Vol. 21, No. 14, Seiten 2631-2641 bekannt. Hier wird ein Primärspiegel beschrieben, der aus einer Vielzahl einzelner hexagonaler Spiegelkörper mit Lagerungs- und Justierelementen besteht. Da die Spiegelkörper hexagonal sind, bilden sie zusammen keine komplette Vollkreisfläche. Zwischen den einzelnen Spiegelkörpern sind Sensoren angebracht, welche die Verschiebung benachbarter Spiegelkörper gegeneinander messen. Die Herstellung der einzelnen hexagonalen Spiegelkörper selbst ist äußerst problematisch. Es handelt sich bei diesen um achsferne Ausschnitte eines Paraboloides, die sechseckig zugeschnitten werden müssen. Bei der Herstellung wird von einem kreisförmigen Rohling ausgegangen, der durch am Rand ansetzende, genau definierte Scher- und Biegekräfte verformt wird. In den verformten Rohling wird dann eine Kugelform eingeschliffen. Danach werden die aufgebrachten Kräfte wieder entfernt. Sofern die Kräfte richtig gewählt waren, nimmt jeder Spiegelkörper bei der Entlastung die gewünschte Form des Paraboloid-Ausschnittes des Primärspiegels an. Es hat sich jedoch gezeigt, daß beim Schneiden in die hexagonale Form Verwerfungen auftreten können, die beim fertigen Primärspiegel die Bildqualität verschlechtern.

Darüber hinaus muß die Lage der einzelnen, sehr dünnwandigen hexagonalen Spiegelkörper je nach der Stellung des Primärspiegels im Spiegelteleskop, je nach Windlast und je nach Temperaturschwankungen nachgeregelt werden. Dazu sind die Unterstützungspunkte jedes Spiegelkörpers mit drei Lagereglern verbunden, die den Spiegelkörper nachfokussieren und in zwei Neigungsrichtungen verstellen können. An den Kanten der Spiegelkörper befinden sich Sensoren, welche die Verschiebung benachbarter Spiegelkörper gegeneinander messen. Zusammen mit drei Neigungssensoren, welche die Gesamtkrümmung des Spiegelkörpers messen, liefern diese die Informationen, die in einem Rechnersystem verarbeitet werden, das die insgesamt 108 Lageregler steuert. Bei insgesamt 168 verschiedenen Sensoren ist die Redundanz so groß, daß der Ausfall einzelner Sensoren verkraftet werden kann. Allerdings bleiben bei dieser Anordnung die Vorderseiten der Spiegelkörper von störenden Kontrollsystemen frei. Die einzelnen Spiegelkörper müssen nur gelegentlich mit Hilfe eines Sternbildes nachjustiert werden, so daß auch Infrarotbeobachtungen am Tage möglich sind. Die Sensoren und die Lageregler müssen auf mindestens 50 nm genau arbeiten.

Bei theoretischen Untersuchungen des Primärspiegels des im DE-Patent 35 38 208 beschriebenen Spiegelteleskops, dessen Spiegelkörper kreisscheibenförmig ausgebildet sind, so daß zwischen den einzelnen Spiegelkörpern Freiflächen für die Lagerung der Spiegelkörper und für das Halterungsgestänge bzw. für dessen Abschattungsflächen gebildet sind, hat es sich gezeigt, daß die Freiflächen die Infrarottauglichkeit des Primärspiegels in Frage stellen. Die im Bereich der Freiflächen befindlichen metallischen Bauteile des Tragegerüstes des Primärspiegels senden eigene Wärmestrahlungen zum im Fokus des Primärspiegels befindlichen Empfangsgerät (Detektor) und stören bzw. verrauschen das zu empfangende Infrarotsignal aus dem All. Die Infrarottauglichkeit des Primärspiegels ist notwendig, um dunkle Körper im All, die als Masse vorhanden, aber für das menschliche Auge nicht sichtbar sind, mit dem Primärspiegel erkennbar zu machen. Theoretisch kann das Phänomen der eigenen Infrarot-Wärmestrahlung der Freiflächen des Primärspiegels durch technische Gegenmaßnahmen ausgeschaltet werden. Diese sind jedoch äußerst aufwendig.

Die aufgrund der theoretischene Untersuchungen am Spiegelteleskop gemäß DE-Patent 35 38 208 vorgenommenen Untersuchungen, welche die Infrarottauglichkeit dieses Primärspiegels in Frage stellten, führten zur theoretischen Untersuchung des Primärspiegels des Mauna-Kea-Spiegelteleskopes mit 10 m Spiegeldurchmesser, das in der eingangs zitierten Veröffentlichung "Applied Optics", a.a.O. beschrieben wird. Auch hier wurden trotz der an sich geschlossenen Spiegelfläche störende Infrarotstrahlungen festgestellt. Diese konnten auf die im Bereich der Berührungslinien der aneinander stoßenden hexagonalen Spiegelkörper angebrachten Sensoren zurückgeführt werden, welche die Verschiebung benachbarter Spiegelkörper gegeneinader messen. Wie schon erwähnt, weist dieser Primärspiegel insgesamt 168 Verschiebungssensoren auf. Auch diese strahlen eine ganz erhebliche Eigenwärme aus, welche sich wiederum als störende Infrarotstrahlung bemerkbar macht. Neben der hierdurch bedingten mangelnden Infrarottauglichkeit führt auch die ungleichmäßige Außenkontur des aus hexagonalen Spiegelkörpern zusammengefügten Primärspiegels zu negativen Auswirkungen in der Punkt-Bild- als auch in der Modulationsübertragungsfunktion.

Aus der US-A-3,972,598 ist ein Primärspiegel bekannt, der aus einzelnen Spiegelkörpern zusammengesetzt ist und der eine kreisförmige Spiegelfläche besitzt. Dies wird durch im Randbereich des Primärspiegels vorgesehene Spiegelkörper erreicht, die eine solche Form haben, daß der Außenrand des Primärspiegels kreisförmig ist. Zur Verbesserung der IR-Eigenschaften ist die Oberfläche der einzelnen Spiegelkörper jeweils konkav ausgeformt. Hierbei liegen an den Stoßseiten der einzelnen Spiegelkörper gewölbte Erhebungen vor. Demgemäß ist bei dieser Formgebung der Oberfläche der Spiegelkörper keine asphärisch gekrümmte Spiegelfläche erreichbar.

Aus der DE-A-30 18 785 sind Spiegelkörper bekannt, deren Wabenstruktur aus Quarz oder Glaskeramik hergestellt sind. Derartige Spiegelkörper mit Hohlräumen haben den wesentlichen Vorteil, daß sie nur ein geringes Gewicht aufweisen. Auch aus der Informationsschrift der Wissenschaftlichen Astronomischen Tagung in München vom 14. bis 18. September 1987 ist ein aus Spiegelsegmenten hergestellter Primärspiegel bekannt, der im wesentlichen eine kreisförmige Spiegelfläche aufweist. Eine asphärisch gekrümmte Spiegeloberfläche ist nicht vorgesehen. Die Verformung der Oberfläche der einzelnen Spiegelkörper erfolgt durch sogenanntes Slumpen. Hierbei wird die Deckplatte eines Spiegelkörpers in die gewünschte geometrische Form vorgebogen und anschließend über ein Gerüst aus Quarz-Glas mit einer Grundplatte verbunden z.B. durch Schweißen. Abschließend erfolgt das Schleifen und Polieren der Oberfläche des Spiegelkörpers in die endgültige Form. Dies kann durch Einzelschliff oder durch Verbundschleifen mehrerer, in der Oberflächenform gleich ausgebildeter Spiegelkörper erfolgen, die dann gemeinsam bearbeitet werden.

Ausgehend von dem vorstehend genannten Stand der Technik liegt der Erfindung die Aufgabe zugrunde, einen Primärspiegel für ein Spiegelteleskop der eingangs genannten Art vorzuschlagen, der eine verbesserte Bildentstehung und eine erhöhte Infrarottauglichkeit aufweist und wobei die Herstellung mit hoher Präzision und auf kostengünstige Weise möglich ist.

Erfindungsgemäß wird diese Aufgabe bei einem Primärspiegel mit den Merkmalen des Anspruches 1 und mit einem Herstellungsverfahren gemäß Anspruch 6 gelöst.

Im Gegensatz zu dem vorstehend genannten Stand der Technik weist der erfindungsgemäße Primärspiegel eine Spiegelfläche auf, bei der die einzelnen Spiegelkörper nahezu lückenlos zu einer im wesentlichen kreisförmigen Spiegelfläche zusammengesetzt sind. Die kreisförmige Spiegelfläche führt zu einer verbesserten Bildentstehung, insbesondere hinsichtlich der Punktbild- und Modulationsübertragungsfunktion. Bei einer kreisförmigen Außenkontur treten im Gegensatz zu der etwa sechseckförmigen Außenkontur des eingangs zitierten Primärspiegels im Randbereich keine Störungen auf. Da zwischen den einzelnen Spiegelkörpern keine störenden Elemente, insbesondere keine Sensoren vorgesehen sind, wird weiterhin die Infrarottauglichlkeit des Primärspiegels verbessert. Bei dem erfindungsgemäßen Primärspiegel sind die Spiegelkörper nahezu lückenlos aneinandergesetzt. Dies wird erst dadurch möglich, daß die einzelnen Spiegelkörper in einem sehr speziellen Herstellungsverfahren hergestellt werden. Dieses spezielle Herstellungsverfahren gewährleistet, daß im Randbereich der Spiegelkörper keine Verwerfungen auftreten. Somit können Spiegelkörper geschaffen werden, die im zusammengesetzten Zustand nahezu lückenlos aneinandergefügt sind. Schließlich besitzen die einzelnen Spiegelkörper eine Hohlräume aufweisende Wabenstruktur, die zu einem verringerten Gesamtgewicht des Primärspiegels führt.

Die Oberflächen der Spiegelkörper können einzeln oder im Verbund poliert werden, so daß diese die Form einer asphärischen "Off-Axis-Sektion" annehmen. Der Primärspiegel hat vorzugsweise parabolische Form, jedoch kann auch eine davon abweichende Form wie z.B. bei einem Spiegelteleskop nach Ritchey-Chrétien vorgesehen sein. Wegen des großen Gesamtdurchmessers bzw. der großen Gesamtöffnung des Primärspiegels stellen dessen einzelne an einen zentralen Spiegelkörper anschließende Spiegelkörper außeraxiale Ausschnitte des Primärspiegels dar, die einzeln oder im Verbund geschliffen und poliert werden. Jeder der derart bearbeiteten einzelnen Spiegelkörper weist eine Tragstruktur, z.B. eine Wabenstruktur auf. Als Material kann Quarz oder Glaskeramik verwendet werden. Die in dieser Bauweise ausgebildeten Spiegelkörper werden bereits derart vorgeformt, daß sie mit dem Schleifverfahren einzeln oder im Verbund nur noch endvergütet werden müssen. Dies bedeutet, daß die Rohlinge der einzelnen Spiegelkörper bereits als Rohstruktur ihre endgültige Form vor dem Schleifvorgang erhalten und dann mittels des Schleifverfahrens noch oberflächen- und formendverarbeitet werden müssen. Dies kann beim Schleifvorgang einzeln oder im Verbund erfolgen.

Die Verwendung einer an sich geschlossenen Vollkreisfläche als Spiegelfläche des Primärspiegels, der selbst aus einer Vielzahl vieleckiger Spiegelkörper gebildet ist, ermöglicht, daß hervorragende Ergebnisse sowohl in der Punktbild als auch in der Modulations-Übertragungsfunktion erzielt werden. Darüber hinaus wird durch die Anordnung aller Lagerungs- und Justierelemente unterhalb der Spiegelkörper erreicht, daß im Bereich der wirksamen, geschlossenen Spiegelfläche keine störenden Infrarotstrahler vorhanden und damit keine störende Infrarotstrahlung erzeugt wird, so daß der erfindungsgemäße Primärspiegel auch die notwendige Infrarottauglichkeit aufweist.

Die einzelnen, aus vorgeformten Leichtgewichtstrukturen gebildeten Spiegelkörper des Primärspiegels, die im wesentlichen hexagonale Form, aber auch eine mehreckige Form mit einem bogenförmigen Rand aufweisen, werden derart geschliffen und poliert, daß sich die Freiheitsgrade der Schleif- und Polierwerkzeuge der "Off-Axis-Sektion"-Form eines zu erstellenden Primärspiegels anwenden lassen. Dies kann rechnergesteuert mittels Polarkoordinaten erfolgen, wobei die Werkzeugführung unmittelbar erfolgt. Somit kann ein Primärspiegel großen Durchmessers zu einem astronomischen Großspiegel ausgebildet werden, wobei die unmittelbar achsfern ausgeschliffenen und endpolierten Spiegelkörper nahezu lückenlos aneinander gesetzt sind. An den Unterseiten der Spiegelkörper befinden sich die Lagerungs- und Justierelemente, zu welchen selbstverständlich auch die Neigungssensoren gehören. Somit kann jeder Spiegelkörper separat zur Ausrichtung auf einen gemeinsamen Brennpunkt gesteuert werden. Dies erfolgt rechnerkontrolliert, wobei hochfein bemessene, erforderliche Toleranzen eingehalten werden können. Die optisch nicht wirksamen Trennlinien zwischen den einzelnen Spiegelkörpern bleiben somit von jeglicher störender Wärmestrahlung frei und sind ohne jeden Einfluß auf die Bildqualität. Somit ist der erfindungsgemäße Primärspiegel absolut infrarottauglich und höchst meßempfindlich. Der Durchmesser ist theoretisch unbegrenzt erweiterbar.

Weitere vorteilhafte Ausgestaltungen der Erfindung ergeben sich aus den Unteransprüchen.

Die Erfindung ist nachfolgend anhand eines in den Zeichnungen näher dargestellten Ausführungsbeispieles eines Primärspiegels für ein Spiegelteleskop näher erläutert. Es zeigen:
- Fig. 1: die Draufsicht auf den Primärspiegel mit zentraler Öffnung,

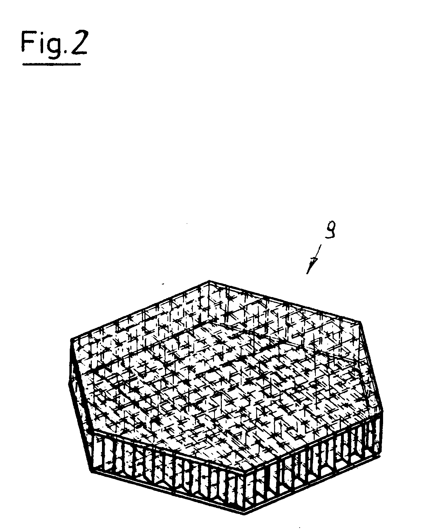

- Fig. 2: einen einzelnen hexagonalen Spiegelkörper des Primärspiegels in gegenüber Fig. 1 vergrößerter perspektivischer Darstellung,
- Fig. 3: die Lagerungselemente eines Spiegelkörpers und
- Fig. 4: einen Querschnitt durch den Spiegelkörper im Bereich eines Lagerungselementes.

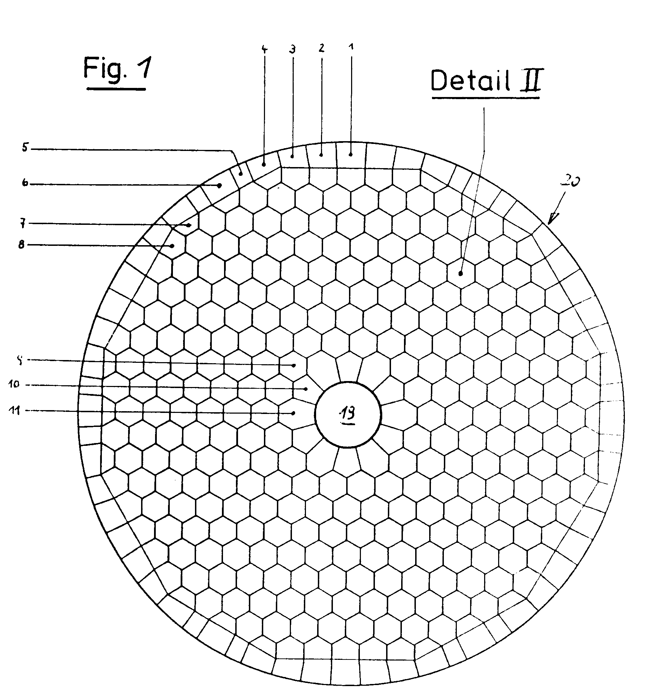

Der in Fig. 1 in Draufsicht dargestellte Primärspiegel 20 für ein Spiegelteleskop besteht aus einer Vielzahl einzelner, vieleckiger Spiegelkörper 1 bis 11 und aus diesen zugeordneten Lagerungs- und Justierelementen 12. Der Außenrand des Primärspiegels 20 wird durch vieleckige Spiegelkörper 1 bis 6 unterschiedlicher Formen gebildet, deren Außenkanten den Kreisradius des Primärspiegels 20 aufweisen. Nach innen hin schließen sich zunächst weitere, unregelmäßig ausgeformte vieleckige Spiegelkörper 7,8 an. Die wesentliche Fläche des Primärspiegels 1 wird durch eine Vielzahl hexagonaler Spiegelkörper 9 gebildet. Zu dem durch eine kreisrunde Öffnung 19 gebildeten Zentrum des Primärspiegels 20 hin sind wiederum eine Anzahl unterschiedlich ausgeformter, vieleckiger Spiegelkörper 10,11 angeordnet, deren nach innen gerichteter Rand den Kreisradius der zentralen Öffnung 19 aufweist. Auf diese Weise wird die Spiegelfläche des Primärspiegels 20 durch die Vielzahl einzelner, hexagonaler Spiegelkörper 9 und durch radial an die Außenränder der hexagonalen Spiegelkörper 9 anschließenden Anschluß-Spiegelkörper 1 bis 8 zu einer Vollkreisfläche ausgebildet, wobei im Zentrum des Primärspiegels 20 um dessen zentrale Öffnung 19 herum weitere Anschluß- Spiegelkörper 10,11 sich an die Innenränder der hexagonalen Spiegelkörper 9 anschließen.

Jeder Spiegelkörper 1 bis 11 und insbesondere jeder hexagonale Spiegelkörper 9 besteht aus einem massereduzierten vorgeformten Werkstoff aus einer Wabenstruktur (DE-PS 3018785). Werkstoffe sind insbesondere Quarz und Glaskeramik, welche eine Leichtbauweise des Primärspiegels ermöglichen. Die einzelnen Spiegelkörper 1 bis 11 bestehen wegen der großen Gesamtöffnungsweite des Primärspiegels 20 aus gewichtsreduzierten Materialien und bilden achsferne Ausschnitte eines Primärspiegels, die bereits so vorgeformt werden, daß diese über ein abschließendes Schleifverfahren nur noch endvergütet werden müssen. Das bedeutet, daß der Rohling eines jeden Spiegelkörpers 1 bis 11 bereits als Rohstruktur seine endgültige Form vor dem Schleifvorgang erhält und dann mittels eines Schleifverfahrens nur noch in Oberfläche und Form endverarbeitet wird. Dies kann in einem Schleifvorgang einzeln oder im Verbund geschehen. Auf der Unterseite weist jeder Spiegelkörper 1 bis 11 Paßbohrungen 21 auf, in welche die einzelnen Lagerungs- und Justierelemente 12 eingreifen.

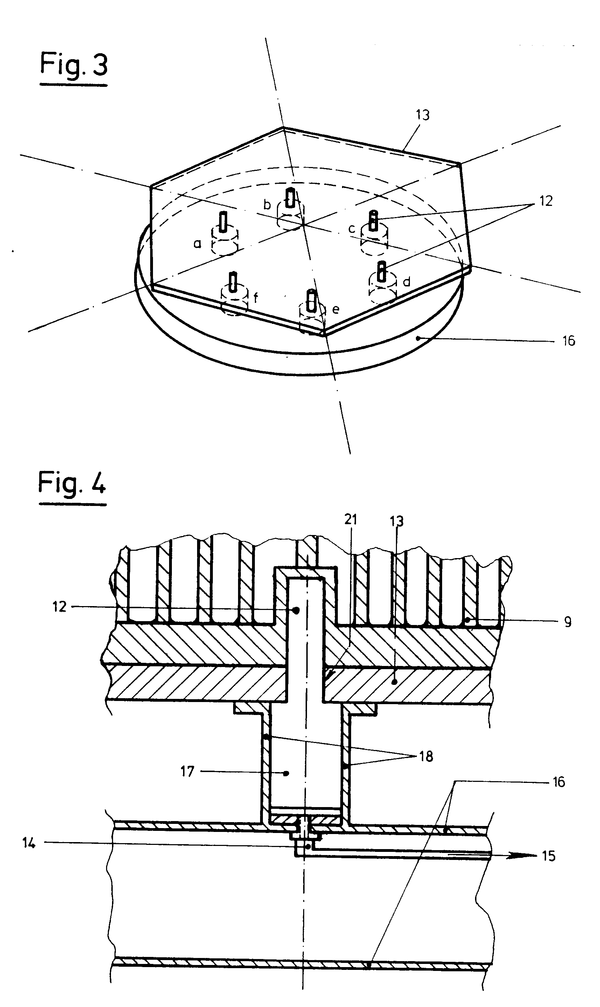

Die Fig. 3 zeigt die perspektivische Anordnung einer einzelnen hexagonalen Spiegellagerplattform 13 mit insgesamt sechs Lagerungs- und Justierelementen 12 auf einer Lagerplatte 16. Wie es Fig. 4 zeigt, durchdringen die einzelnen Lagerungs- und Justierelemente 12 die Paßbohrungen 21 der Unterseiten der einzelnen Spiegelkörper 9, ohne jedoch über deren Spiegelfläche hinauszuragen. Die doppelwandig ausgeführte Trägerplatte 16 ist mit Druckmittelzuführungen 14, 15 versehen, welche an Lage- und Justierzylinder 18 angeschlossen sind, in welchen Lagerungs- und Justierkolben 17 geführt sind, die einstückig mit den Lagerungs- und Justierelementen 12 verbunden sind. Auf diese Weise können die einzelnen Spiegelkörper 1 bis 11 im gesamten Primärspiegel 2o einjustiert werden.

Die Lagerungs- und Justierelemente eines jeden Spiegelkörpers 1 bis 11 sind gemäß seiner geometrischen Form derart ausgerichtet und angeordnet, daß der so abgestützte Spiegelkörper 1 bis 11 in jeder Lage des Primärspiegels mittels hydraulisch steuerbarer Auflagestützen in der für diesen notwendigen Weise exakt auf den Brennpunkt des Primärspiegels gehalten und mittels rechnerüberwachter Feinjustage-Elemente ständig nachgeregelt wird. Das bedeutet, daß für unterschiedliche Formen des vieleckigen Außenrandes der Spiegelkörper die Anordnung der Lagerungs- und Justier-Elemente unter Berücksichtigung der Festigkeit und des Gewichtes des jeweiligen Spiegelkörpers unterschiedlich gewählt ist.

In nicht dargestellter Weise kann auch im Zentrum des Primärspiegels ein im Durchmesser größerer, rotationssymmetrisch geschliffener, massenreduzierter Großspiegel angeordnet sein, an welchen sich lückenlos achsferne Flächenelemente anschließen, welche zu einer vollen Kreisfläche führen. Die achsferneren Flächenelemente sind dann dergestalt separat steuer- und justierbar angeordnet, daß diese den kreisrunden und in dieser Form optisch wirksamen Primärspiegel bilden.

In nicht näher dargestellter Weise befinden sich ferner die Verschiebungssensoren direkt in den einzelnen Hohlräumen der aus einer Wabenstruktur bestehenden Spiegelkörper, insbesondere aus Quarzglas, wodurch keine Nachteile für die Infrarottauglichkeit des Primärspiegels auftreten. Ein solcher Spiegelkörper aus Quarzglas in Leichtgewichtsbauweise ist aus einer Informationsschrift der Wissenschaftlichen Astronomischen Tagung in München vom 14. - 18.September 1987 bekannt. Dabei wird die Deckplatte eines Spiegelkörpers durch sogenanntes Slumpen in die gewünschte geometrische Form vorgebogen und anschließend über ein Gerüst aus Quarzglas mit einer Grundplatte verbunden, z.B. durch Schweißen. Abschließend erfolgt das Schleifen und Polieren der Oberflächen des Spiegelkörpers in die endgültige Form. Dies kann durch Einzelschliff oder durch Verbundschleifen mehrerer,in der Oberflächenform gleich auszubildender Spiegelkörper erfolgen, die dann gemeinsam bearbeitet werden.

## Patentansprüche

1. Primärspiegel (20) für ein Spiegelteleskop, der aus einer Vielzahl von einzelnen vieleckigen Spiegelkörpern (1 bis 11) zusammengesetzt ist und eine asphärisch gekrümmte Spiegelfläche aufweist, wobei den einzelnen Spiegelkörpern (1 bis 11) Lagerungs- und Justierelemente (12) zugeordnet sind, die unterhalb der Spiegelkörper angeordnet sind, und wobei die einzelnen Spiegelkörper (1 bis 11) nahezu lückenlos zusammengesetzt sind,
dadurch gekennzeichnet,
daß die einzelnen Spiegelkörper (1 bis 8) im Randbereich des Primärspiegels (20) eine solche Form haben, daß der Außenrand des Primärspiegels kreisförmig ist,
und daß jeder einzelne Spiegelkörper (1 bis 11) eine Hohlräume aufweisende Wabenstruktur besitzt, wobei jeder einzelne Spiegelkörper (1 bis 11) aus einem Rohling hervorgeht, der bereits als Rohstruktur eine Oberflächenform hat, die dem jeweiligen achsfernen asphärischen Ausschnitt des Primärspiegels (20) annähernd entspricht.

2. Primärspiegel (20) nach Anspruch 1,
dadurch gekennzeichnet,
daß die Spiegelkörper (1 bis 11) aus Quarz oder Glaskeramik gebildet sind.

3. Primärspiegel (20) nach Anspruch 1 oder Anspruch 2,
dadurch gekennzeichnet,
daß die Lagerungs- und Justierelemente (12) an Paßbohrungen (21) angeordnet sind, die an der Unterseite der Spiegelkörper (1 bis 11) vorgesehen sind.

4. Primärspiegel (20) nach einem der Ansprüche 1 bis 3,
dadurch gekennzeichnet,
daß den Lagerungs- und Justierelementen (12) eine hydraulische Verstelleinrichtung (17, 18) zur Einjustierung der Spiegelkörper (1 bis 11) zugeordnet ist.

5. Primärspiegel (20) nach einem der Ansprüche 1 bis 4,
dadurch gekennzeichnet,
daß in den Hohlräumen der Spiegelkörper (1 bis 11) Meßsensoren eingebaut sind, mit denen die relative Lage der einzelnen Spiegelkörper (1 bis 11) bestimmbar ist, und daß die Meßsensoren über rechnerunterstützte Systeme die zur exakten Justierung und Regelung der einzelnen Spiegelkörper (1 bis 11) erforderlichen Betätigungselemente (Aktuatoren) und Justierelemente (12) ansteuern und kontinuierlich überwacht regeln.

6. Verfahren zur Herstellung eines Primärspiegels (20) für ein Spiegelteleskop, wobei der Primärspiegel aus einer Vielzahl von einzelnen vieleckigen Spiegelkörpern (1 bis 11) zusammengesetzt wird, wobei die Spiegelkörper so geformt sind und in einer solchen Weise zusammengesetzt werden, daß eine asphärish gekrümmte Spiegelfläche entsteht, wobei den einzelnen Spiegelkörpern (1 bis 11) Lagerungs- und Justierelemente (12) zugeordnet werden, die unterhalb der Spiegelkörper angeordnet sind, und wobei die einzelnen Spiegelkörper (1 bis 11) nahezu lückenlos zusammengesetzt werden,
dadurch gekennzeichnet,
daß die Form der einzelnen Spiegelkörper im Randbereich des Primärspiegels so gewählt wird, daß der Außenrand des Primärspiegels kreisförmig ist,
daß die einzelnen Spiegelkörper (1 bis 11) aus Rohlingen mit einer Hohlräume aufweisenden Wabenstruktur hergestellt werden, daß die einzelnen Rohlinge der Spiegelkörper (1 bis 11) derart vorgeformt werden, daß ihre Oberflächenform den jeweils achsfernen asphärischen Ausschnitten des Primärspiegels (20) entspricht und somit die Spiegelkörper (1 bis 11) bereits als Rohstruktur im wesentlichen ihre endgültige Form erhalten, daß die Spiegelkörper (1 bis 11) anschließend lediglich einem abschließenden Schleif- und Poliervorgang zur Endvergütung der Oberfläche unterworfen werden.

7. Verfahren nach Anspruch 6,
dadurch gekennzeichnet,
daß in der Oberflächenform verschiedenartige Spiegelkörper (1 bis 11) einzeln geschliffen und poliert werden.

8. Verfahren nach Anspruch 6,
dadurch gekennzeichnet,
daß in der Oberflächenform gleichgestaltete Spiegelkörper ( 1 bis 11) im Verbund geschliffen und poliert werden.

9. Verfahren nach einem der Ansprüche 6 bis 8,
dadurch gekennzeichnet,
daß die Spiegelkörper (1 bis 11) rechnergesteuert mittels Polarkoordinaten geschliffen und poliert werden, wobei die Werkzeugführung unmittelbar erfolgt.

## Claims

1. A primary mirror (20) for a reflecting telescope, which is assembled from a plurality of individual polygonal mirror bodies (1 to 11) and has an aspherically curved mirror surface, in which there are associated with the individual mirror bodies (1 to 11) bearing and adjusting elements (12), which are arranged beneath the mirror bodies, and in which the individual mirror bodies (1 to 11) are assembled almost without gaps, characterised in that the individual mirror bodies (1 to 8) in the edge region of the primary mirror (20) have a form such that the outer edge of the primary mirror is circular, and that each individual mirror body (1 to 11) has a honeycomb structure having cavities, in which each individual mirror body (1 to 11) originates from a blank which already as an unfinished structure has a surface form which approximately corresponds to the respective aspherical cut-out of the primary mirror (20) away from the axis.

2. A primary mirror (20) according to Claim 1, characterised in that the mirror bodies (1 to 11) are formed from quartz or glass ceramics.

3. A primary mirror (20) according to Claim 1 or Claim 2, characterised in that the bearing and adjusting elements (12) are arranged on fitting bores (21), which are provided on the underside of the mirror bodies (1 to 11).

4. A primary mirror (20) according to one of Claims 1 to 3, characterised in that there is associated with the bearing and adjusting elements (12) a hydraulic adjustment device (17,18) for the adjusting of the mirror bodies (1 to 11).

5. A primary mirror (20) according to one of Claims 1 to 4, characterised in that in the cavities of the mirror bodies (1 to 11) measurement sensors are installed, with which the relative position of the individual mirror bodies (1 to 11) is able to be determined, and that the measurement sensors, via computer-assisted systems, control the actuating elements (actuators) and adjusting elements (12) required for the exact adjustment and regulation of the individual mirror bodies (1 to 11), and regulate them so as to be continuously monitored.

6. A method for the production of a primary mirror (20) for a reflecting telescope, in which the primary mirror is assembled from a plurality of individual polygonal mirror bodies (1 to 11), in which the mirror bodies are formed and are assembled in such a manner that an aspherically curved mirror surface is produced, in which there are associated with the individual mirror bodies (1 to 11) bearing and adjusting elements (12), which are arranged beneath the mirror bodies, and in which the individual mirror bodies (1 to 11) are assembled almost without gaps, characterised in that the form of the individual mirror bodies in the edge region of the primary mirror is selected such that the outer edge of the primary mirror is circular, that the individual mirror bodies (1 to 11) are produced from blanks with a honeycomb structure having cavities, that the individual blanks of the mirror bodies (1 to 11) are pre-formed such that their surface form corresponds to the respectively aspherical cut-outs of the primary mirror (20) away from the axis and hence the mirror bodies (1 to 11) already substantially receive their final form as an unfinished structure, that the mirror bodies (1 to 11) subsequently merely undergo a final grinding and polishing process, for the final improving of the surface.

7. A method according to Claim 6, characterised in that mirror bodies (1 to 11) which are varied in surface form are ground and polished individually.

8. A method according to Claim 6, characterised in that mirror bodies (1 to 11) which are identical in surface form are ground and polished together.

9. A method according to one of Claims 6 to 8, characterised in that the mirror bodies (1 to 11) are ground and polished under computer control by means of polar coordinates, in which the tool guidance takes place directly.

## Revendications

1. Miroir primaire (20) pour un télescope à miroir qui se compose de plusieurs corps de miroir (1 à 11), individuels, polygonaux et présente une surface de miroir à courbure non sphérique, à chaque corps de miroir (1 à 11) étant associés des éléments d'ajustage et de positionnement (12) qui sont disposés en dessous des corps de miroir, et les différents corps de miroir (1 à 11) étant assemblés pratiquement sans vide,
caractérisé
en ce que, dans la zone de bordure du miroir primaire (20), chacun des corps de miroir (1 à 8) a une forme de manière que le bord extérieur du miroir primaire (20) ait une forme circulaire,
et en ce que chacun des corps de miroir (1 à 11) possède une structure en nid d'abeilles présentant des cavités, chaque corps de miroir (1 à 11) résultant alors d'une ébauche qui dispose déjà en tant que structure de base, d'une forme de surface qui correspond approximativement à la section respective du miroir primaire (20), non-sphérique et extraaxiale.

2. Miroir primaire (20) selon la revendication 1,
caractérisé
en ce que les corps de miroir (1 à 11) sont formés à partir de quartz ou de vitrocéramique.

3. Miroir primaire (20) selon la revendication 1 ou la revendication 2,
caractérisé
en ce que les éléments d'ajustage et de positionnement (12) sont disposés dans des alésages ajustés (21) qui sont prévus sur la face inférieure des corps de miroir (1 à 11).

4. Miroir primaire (20) selon l'une des revendications 1 à 3,
caractérisé
en ce qu'un dispositif de réglage hydraulique (17, 18) pour l'ajustage des corps de miroir (1 à 11) est associé aux éléments d'ajustage et de positionnement (12).

5. Miroir primaire (20) selon l'une des revendications 1 à 4,
caractérisé
en ce que,dans les cavités des corps de miroir (1 à 11),sont encastrés des capteurs de mesure qui sont capables de déterminer la position relative de chacun des corps de miroir (1 à 11) et en ce que les capteurs de mesure commandent, par l'intermédiaire des systèmes assistés par ordinateur, des éléments d'actionnement (activateurs) et les éléments d'ajustage (12) nécessaires à la régulation et à l'ajustage exacts des différents corps de miroir (1 à 11) et, ce, sous surveillance continue de réglage.

6. Procédé pour la fabrication d'un miroir primaire (20) pour un télescope à miroir qui se compose de plusieurs corps de miroir (1 à 11) individuels, polygonaux et présente une surface de miroir à courbure non sphérique, à chaque corps de miroir (1 à 11) étant associés des éléments d'ajustage et de positionnement (12) qui sont disposés en dessous des corps de miroir, et les différents corps de miroir (1 à 11) étant assemblés pratiquement sans vide,
caractérisé
en ce que,dans la zone de bordure du miroir primaire, la forme de chacun des corps de miroir est choisie de manière à ce que le bord extérieur du miroir primaire soit circulaire,
que chacun des corps de miroir (1 à 11) est fabriqué à partir d'ébauches avec une structure en nid d'abeilles présentant des cavités, que chacune des ébauches des corps de miroir (1 à 11) est préformée de sorte que leur forme de surface corresponde aux sections respectives du miroir primaire (20), non sphériques et extra-axiales, les corps de miroir (1 à 11) obtiennent déjà, en tant que structure de base, sensiblement leur forme définitive, que les corps de miroir (1 à 11) sont simplement soumis à une opération finale de rectification et de polissage pour le traitement de finition de la surface.

7. Procédé selon la revendication 6,
caractérisé
en ce que des corps de miroir (1 à 11) se différenciant par la forme de leur surface sont polis et rectifiés séparément.

8. Procédé selon la revendication 6,
caractérisé
en ce que des corps de miroir (1 à 11) présentant la même forme de surface sont rectifiés et polis ensemble.

9. Procédé selon l'une des revendications 6 à 8,
caractérisé
en ce que les corps de miroir (1 à 11) sont rectifiés et polis par commande d'ordinateur au moyen de coordonnées polaires, le guidage de l'outil étant effectué directement.
